# EUROPÄISCHE PATENTSCHRIFT

(11) **EP 1 249 639 B1**
(45) Veröffentlichungstag und Bekanntmachung des Hinweises auf die Patenterteilung: **26.08.2009**
(21) Anmeldenummer: 02004822.9
(22) Anmeldetag: 02.03.2002
(51) Int. Cl.: F16H 7/08

(54) **Spannvorrichtung für einen zum Antrieb von Nebenaggregaten einer Brennkraftmaschine dienenden Riemenantrieb**
Tensioning device for belt drive for auxiliaries of an internal combustion engine
Disposotif tendeur pour transmission à courroie entraînant les auxiliaires d'un moteur à combustion interne

(30) Priorität: 12.04.2001 DE 10118278
(43) Veröffentlichungstag der Anmeldung: 16.10.2002
(73) Patentinhaber: Bayerische Motoren Werke Aktiengesellschaft, 80809 München (DE)
(72) Erfinder: Tischberger, Friedrich, 4407 Dietach (AT); Kutscha, Markus, 4451 Gansten (AT)

(56) Entgegenhaltungen:
- EP-A- 1 122 464
- WO-A-00/77422
- WO-A-02/10615
- US-A- 4 758 208
- US-A- 4 981 116

## Beschreibung

Die Erfindung betrifft eine Spannvorrichtung für einen zum Antrieb von Nebenaggregaten einer Brennkraftmaschine dienenden Riementrieb, umfassend eine schwenkbeweglich unter Federvorspannung auf einen Antriebsriemen einwirkende erste Rolle, die mit einer zweiten, schwenkbeweglich angeordneten Rolle über ein Koppelglied derart verbunden ist, dass diese zweite Rolle über die erste Rolle bei sich ändernden Trumkräften des Riementriebes verschwenkt ist.

Eine derartige Spannvorrichtung ist beispielsweise aus der DE 38 14 525 A1 bekannt, wobei die erste Rolle einem Keilriementrieb zugeordnet ist und die zweite Rolle einem zum ersten Riementrieb parallel angeordneten Zahnriementrieb. Bei dieser bekannten Spannvorrichtung dient als Koppelglied ein Feder-Dämpferelement, das auf beide Rollen zur jeweiligen Erhöhung der Riemenspannung einwirkt. Eine Nachspannung des Zahnriemens über die auf einem Exzenterbund gelagerte zweite Rolle erfolgt dabei insbesondere während des Betriebs der Brennkraftmaschine, wenn durch den Antrieb der Nebentriebe am Keilriemen eine Reaktionskraft auftritt, die bei schnellen Änderungen über das als starr wirkende Feder-Dämpferelement auf die zweite Rolle übertragen wird. Da die in dem Keilriemen während des Antriebs der Nebentriebe auftretenden Trumkräfte lastabhängig sind, wird das Gesamtsystem so ausgelegt, dass im oberen Lastbereich der Brennkraftmaschine die auf den Zahnriemen einwirkende Spannrolle durch die Trumkräfte des Riementriebes für die Nebenantriebe aus einer Rückstellsperre befreit wird und der Zahnriemen somit gespannt werden kann. Beim Nachlassen der Motorlast arretiert die an der zweiten Rolle vorgesehene Rückstellsperre die erreichte Position der zweiten Rolle und fixiert somit die erreichte Zahnriemenspannung.

Die gattungsbildende WO 00/77422 A1 offenbart ein Spannvorrichtung, die zwei im gehäuseartigen Teil um Achsen und gegeneinander drehbar gelagerte Spannarme umfaßt, die mittels des gemeinsamen Federelements, das mit einem Ende am einen Spannarm und mit dem anderen Ende am anderen Spannarm gehaltert ist, federbelastet sind.

Diese bekannte Spannvorrichtung ermöglicht, daß bei Drehmomentumkehr, wie beispielsweise bei Einsatz eines Startergenerators, das je nach Betriebszustand vorhandene Leertrum spannen zu können bei gleichzeitig geringem Bauraumbedarf.

Der Erfindung liegt die Aufgabe zugrunde, eine Spannvorrichtung mit zwei Spannrollen bereit zu stellen, bei der die Spannrollen an ganz unterschiedlichen Stellen am Riemen angeordnet sein können, wobei die Rollen zugleich mit einem festen Übersetzungsverhältnis unmittelbar gekoppelt sein sollen, und bei Änderung der Riemenspannung eine möglichst große und kräftige Verschwenkung der Rolle erfolgen soll.

Diese Aufgabe ist mit dem Patentanspruch 1 gelöst.

Mit der Erfindung ist in vorteilhafter Weise ein Start der Brennkraftmaschine über einen Generator möglich ohne Verwendung eines zusätzlichen Spannsystems für den Riementrieb.

Vorteilhafte Ausgestaltungen sind in den Unteransprüchen beschrieben.

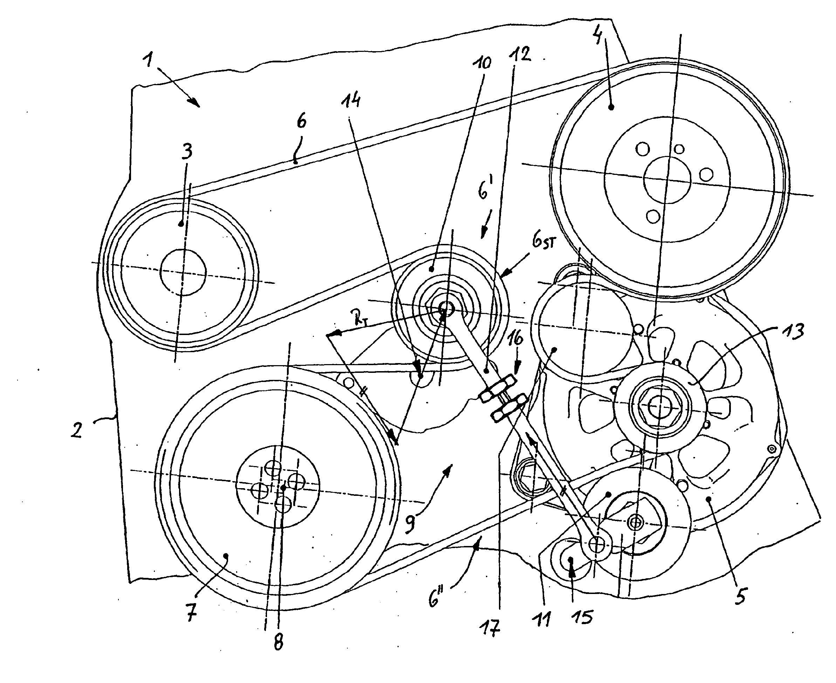

Die Erfindung ist anhand eines in der Zeichnung dargestellten Ausführungsbeispiels beschrieben.

Ein Riementrieb 1 einer nicht näher dargestellten Brennkraftmaschine 2 dient zum Antrieb von Nebenaggregaten, wie beispielsweise einer nicht gezeigten, durch ihre Riemenscheibe 3 repräsentierten Wasserpumpe, einer nicht dargestellten, durch ihre Riemenscheibe 4 repräsentierten Lenkhilfepumpe sowie einen mit 5 bezeichneten Generator, die beim Betrieb der Brennkraftmaschine 2 mittels eines Antriebsriemens 6 über eine Riemenscheibe 7 auf einer Kurbelwelle 8 der Brennkraftmaschine 2 angetrieben sind.

Der Riementrieb 1 ist mit einer Spannvorrichtung 9 ausgerüstet, die eine schwenkbeweglich unter Federvorspannung auf den Antriebsriemen 6 einwirkende erste Rolle 10 umfasst, die mit einer zweiten, schwenkbeweglich angeordneten Rolle 11 über ein Koppelglied 12 derart verbunden ist, dass die zweite Rolle 11 über die erste Rolle 10 bei sich ändernden Trumkräften des Riementriebes 1 verschwenkt ist.

Beim üblichen Antrieb der Nebenaggregate über die Riemenscheiben 3, 4 und 13 des Generators 5 durch die Brennkraftmaschine 2 ist die erste Rolle 10 vom Antriebsriemen 6 >180° umschlungen im antriebsbedingten Leertrum 6' des Riementriebes 1 angeordnet.

Die Spannvorrichtung 9 ist erfindungsgemäß derart gestaltet, dass beim Starten der Brennkraftmaschine 2 durch den im Riementrieb 1 angeordneten Generator 5 die erste Rolle 10 vom starterbedingten Lasttrum 6_{ST} des Riementriebes 1 mit einer solchen resultierenden Trumkraft R_{T} beaufschlagt verschwenkt ist, dass über die schwenkbeweglich verlagerte erste Rolle 10 mittels des Koppelgliedes 12 die zwischen der Generator-Riemenscheibe 13 und der Kurbelwellen-Riemenscheibe 7 vorgesehene, zunächst der Riemenberuhigung dienende zweite Rolle 11 als Spannrolle gegen das starterbedingte Leertrum 6" des Antriebsriemens 6 zwischen den Riemenscheiben 13 und 7 von Generator 5 und Kurbelwelle 8 verlagert ist.

Mit der erfindungsgemäßen Spannvorrichtung 9 wird somit der beim Starterbetrieb der Brennkraftmaschine 2 durch den Generator 5 auftretende Wechsel von Leertrum 6' zum Lasttrum 6_{ST} an der ersten Rolle 10 und der damit verbundenen Verschwenkung der Rolle 10 um den Drehpunkt 14 in vorteilhafter Weise genutzt, um die zunächst der Riemenberuhigung dienende Rolle 11 als Spannrolle an das Leertrum 6" des Antriebsriemens 6 zwischen den Riemenscheiben 13 und 7 heranzuführen, wobei die Rolle 11 um die Achse 15 schwenkbeweglich ist. Im übrigen ist die Rolle 11 als Beruhigungsrolle mit einer vorgespannten, nicht gezeigten Feder ausgerüstet zur Verschwenkung um die Achse 15.

Wie aus der einzigen Figur hervorgeht, ist die am Koppelglied 12 zur Verlagerung der Rolle 11 wirkende Zugkraft aus dem an der Rolle 10 aufgezeigten Kräftedreieck abgeleitet, dessen Basis die resultierende Trumkraft R_{T} beim Starten der Brennkraftmaschine 2 durch den Generator 5 ist.

Weiter ist das Koppelglied 12 als eine starre Stange ausgebildet mit einer Längenverstelleinrichtung 16.

Mit 17 ist eine Umlenkrolle zwischen der Riemenscheibe 4 der Lenkhilfepumpe und der Riemenscheibe 13 des Generators 5 bezeichnet.

## Patentansprüche

1. Spannvorrichtung für einen zum Antrieb von Nebenaggregaten einer Brennkraftmaschine (2) dienenden Riementrieb (1),
- umfassend eine schwenkbeweglich unter Federvorspannung auf einen Antriebsriemen (6) einwirkende erste Rolle (10), die
- mit einer zweiten, schwenkbeweglich angeordneten Rolle (11) über ein Koppelglied (12) derart verbunden ist, dass
- diese zweite Rolle (11) über die erste Rolle (10) bei sich ändernden Trumkräften des Riementriebes (1) verschwenkt ist,
**dadurch gekennzeichnet, dass**
- die erste Rolle (19) um einen ersten Drehpunkt (14) und die zweite Rolle (11) um einen von diesem gesonderten Drehpunkt (15) verschwenkbar ist und
- das Koppelglied (12) als eine starre Stange ausgebildet ist und eine Längenverstelleinrichtung (16) aufweist und
- beim Antrieb der Nebenaggregate (Riemenscheiben 3, 4, 13) durch die Brennkraftmaschine (2) die erste Rolle (10) vom Antriebsriemen (6) >180° umschlungen im antriebsbedingten Leertrum (6') eines einzigen Riementriebes (1) angeordnet ist, und
- beim Starten der Brennkraftmaschine (2) durch einen im Riementrieb (1) angeordneten Generator (5) die erste Rolle (10) vom starterbedingten Lasttrum (6_{ST}) des Riementriebes (1) mit einer solchen resultierenden Trumkraft (R_{T}) beaufschlagt verschwenkt ist, dass über
- die schwenkbeweglich verlagerte erste Rolle (10) mittels des Koppelgliedes (12) die zwischen einer Generator-Riemenscheibe (13) und einer Kurbelwellen-Riemenscheibe (7) vorgesehene, zunächst der Riemenberuhigung dienende zweite Rolle (11) als Spannrolle gegen das starterbedingte Leertrum (6") des Antriebsriemens (6) zwischen Riemenscheiben (13, 7) von Generator (5) und Kurbelwelle (8) verlagert ist.

2. Spannvorrichtung nach Anspruch 1, **dadurch gekennzeichnet, dass** die zweite Rolle (11) als Beruhigungsrolle mit angepasster Federvorspannung am Antriebsriemen (6) anliegt bei Antrieb der Nebenaggregate (3, 4, 5) durch die Brennkraftmaschine (2).

## Claims

1. A tensioning device for a belt drive (1) being used to drive auxiliaries of an internal combustion engine (2),
- comprising a first roller (10) which acts pivotably movably with spring preloading on a drive belt (6) and which
- is connected to a second pivotably movably arranged roller (11) by means of a coupling member (12) in such a way that
- this second roller (11) is pivoted by means of the first roller (10) with changing strand forces of the belt drive (1),
**characterised in that**
- the first roller (19) can be pivoted about a first pivot point (14) and the second roller (11) can be pivoted about a pivot point (15) which is separate therefrom and
- the coupling member (12) is configured as a rigid bar and has a longitudinal adjustment device (16) and
- when the auxiliaries (belt pulleys 3, 4, 13) are driven by the internal combustion engine (2), the first roller (10) is arranged, looped by > 180° by the drive belt (6), in the slack strand (6') due to the drive, of a single belt drive (1), and
- when starting the internal combustion engine (2) by a generator (5) arranged in the belt drive (1), the first roller (10) is pivoted by the load strand (6_{ST}) due to the starter of the belt drive (1), acted upon by a resulting strand force (R_{T}) such that by means of
- the pivotably movably displaced first roller (10), using the coupling member (12), the second roller (11) provided between a generator belt pulley (13) and a crankshaft belt pulley (7) and firstly being used to steady the belt, is displaced as the tensioning roller against the slack strand (6") due to the starter, of the drive belt (6), between the belt pulleys (13, 7) of the generator (5) and the crankshaft (8).

2. A tensioning device according to claim 1, **characterised in that** the second roller (11) rests, as a steading roller with adapted spring preloading on the drive belt (6), when the auxiliaries (3, 4, 5) are driven by the internal combustion engine (2).

## Revendications

1. Dispositif tendeur d'une transmission à courroie (1) servant à l'entraînement d'accessoires d'un moteur à combustion interne (2) comprenant :
- une première poulie (10) mobile en pivotement sous la tension d'un ressort et agissant sur une courroie d'entraînement (6),
- ce dispositif étant relié à une seconde poulie (11) entrainée de manière mobile par l'intermédiaire d'un élément de couplage (12),
- la seconde poulie (11) étant pivotée par la première poulie (10) par la variation des forces des brins de la transmission à courroie (1),
**caractérisé en ce que**
- la première poulie (10) pivote autour d'un premier point de rotation (14) et la seconde poulie (11), autour d'un autre point de rotation (15),
- l'élément de couplage (12) est une barre rigide comportant un dispositif de réglage longitudinal (16),
- lors de l'entraînement de l'équipement auxiliaire (poulies 3, 4, 13) par le moteur à combustion interne (2), la première poulie (10) est enveloppée par la courroie d'entraînement (6) sur un angle supérieur à 180° dans le brin à vide (6') selon les conditions d'entraînement d'une seule transmission à courroie (1), et
- lorsque le moteur à combustion interne est démarré par un générateur (5) installé dans la transmission à courroie (1), la première poulie (10) est dégagée par pivotement du brin mis en charge (6_{ST}) par le démarreur de la transmission à courroie (1), avec une force résultante (R_{T}) appliquée au brin, telle que
- la première poulie (10) montée de manière mobile en pivotement, déplace par l'élément de couplage (12) installé entre la poulie (13) du générateur et la poulie (7) du vilebrequin, tout d'abord la seconde poulie (11) servant à calmer la marche de la courroie en étant appliquée comme galet tendeur contre le brin à vide (6") conditionné par le démarreur de la courroie d'entraînement (6) entre les poulies (13, 7) du générateur (5) et du vilebrequin (8).

2. Dispositif tendeur selon la revendication 1,
**caractérisé en ce que**
la seconde poulie (11) est appliquée comme galet stabilisateur par un dispositif de ressort précontraint contre la courroie d'entraînement (6) pour assurer l'entraînement des accessoires (3, 4, 5) par le moteur à combustion interne (2).
